# EUROPEAN PATENT APPLICATION

(11) **EP 4 524 395 A1**
(43) Date of publication of application: **19.03.2025**
(21) Application number: 23196699.5
(22) Date of filing: 12.09.2023
(51) Int. Cl.: F03D 17/00, F03D 80/50, F03D 80/70

(54) **METHOD FOR OPERATING A WIND TURBINE**

(71) Applicant: Nordex Energy SE & Co. KG, 22419 Hamburg (DE)
(72) Inventor: ADLER, Florian, 22419 Hamburg (DE); BLUM, Oliver, 22419 Hamburg (DE); HARICH, Martin, 22419 Hamburg (DE)
(74) Representative: Epping - Hermann - Fischer

(57) **Abstract**

The invention concerns a method for operating a wind turbine (110), the wind turbine (110) comprising at least a roller bearing (114) for supporting the rotor shaft (160), wherein the roller bearing (114) comprises a bearing inner ring (118), a bearing outer ring (120) and a plurality of rolling elements (122, 124) being arranged between the bearing outer ring (120) and the bearing inner ring (118), the method comprising the following steps:
- detecting, during operation of the wind turbine (110), a damaged rolling element (134) of the plurality of rolling elements (122, 124),
- removing the damaged rolling element (134) from the rotor bearing (114),
- operating the wind turbine (110) with the roller bearing (114) comprising the remaining rolling elements (122, 124).

## Description

The invention relates to a method for operating a wind turbine, the wind turbine comprising at least a roller bearing for supporting the rotor shaft.

Wind turbines with a wind turbine rotor comprising one or more rotor blades (also referred to as rotor blades herein) are well known in the prior art and are used to generate energy and convert wind energy into electrical energy. Thereby, the rotor blades transmit kinetic energy in the form of rotational energy so as to turn a (low speed) main shaft (also: rotor shaft) coupling the rotor blades to a gearbox, or if a gearbox is not used, directly to the generator. For example, the generator may be coupled to the main shaft such that rotation of the shaft drives the generator. For instance, the generator may include a (high-speed) generator shaft rotatably coupled to the main shaft through the gearbox. The generator then converts the mechanical energy from the rotor to electrical energy that may be deployed to a utility grid.

Further, modern wind turbines include a plurality of bearings to provide rotatable support to the various components thereof. For example, the low-speed main shaft typically includes one or more main (roller) bearings mounted at a forward and/or rearward end thereof to allow rotatable support of the low-speed main shaft about an axis. Further, the gearbox may include multiple bearings for providing the desired rotatable support of the various shafts and gears therein.

A technical challenge concerns damage to the bearings. For example, there are specific wind turbine main bearing failure modes which will lead to very sudden main bearing damage and thus to downtime of the wind turbine. For example, individual rolling elements of the main bearing can crack. Cracks in the individual rolling elements may cause damage to the other main bearing components and lead to a main bearing failure. In such situations the wind turbine may be out of operation for a long time (up to several months) until spare parts are delivered and the main bearing can be repaired or replaced. Such situations may therefore lead to a large loss of revenue for the turbine operator and/or the turbine manufacturer. Thus, it would be desirable to have a solution for minimizing unplanned downtime of the turbine and increasing turbine availability.

One object of the invention is to provide an improved concept to reliably and efficiently operate a wind turbine, wherein in particular the availability of the wind turbine is increased.

This object is solved by the independent claim. Advantageous embodiments are given in the sub-claims.

According to a first aspect a method for operating a wind turbine is disclosed. The wind turbine comprises at least a roller bearing, e.g. a tapered or a spherical roller bearing or any other kind of roller bearing, for supporting the rotor shaft, wherein the roller bearing comprises a bearing inner ring, a bearing outer ring and a plurality of rolling elements being arranged between the bearing outer ring and the bearing inner ring. The method comprises the following steps:
- detecting, during operation of the wind turbine, a damaged rolling element of the plurality of rolling elements,
- removing the damaged rolling element from the rotor bearing,
- operating the wind turbine with the roller bearing comprising the remaining rolling elements.

The method according to the invention provides for the rolling element to be removed after damage to said rolling element has been detected. After this removal, the wind turbine is set back into operation with the remaining rolling elements without the damaged rolling element being replaced.

Advantageously, the method provides for the detection and removal of a damaged rolling element at an early stage, before the rolling element suffers major damage which usually leads to a sudden failure of the complete roller bearing (here and in the following also named "rotor bearing", "main rotor bearing" or "rotor roller bearing"), which would render the roller bearing inoperable and force a sudden and typically long downtime of the wind turbine. For example, a rolling element with minor damage is detected and removed, e.g. a rolling element with a minor crack, a hardly visible crack or a crack within the rolling element. Although the rolling element with such minor damage might still be used for a certain period of time, the rolling element is removed before such minor damage gets worse and leads to greater damage.

The method prevents the wind turbine from being out of operation for a long time due to failure of the roller bearing, e.g. for several months, until spare parts and repair activity are provided and/or until regular maintenance takes place. Thus, the method reduces or at least avoids a large loss of revenue either for the turbine operator or the turbine manufacturer. The inventive method enables the wind turbine operation to be stopped only for a short time period for the damaged rolling element to be removed. Subsequently, the wind turbine can continue to be operated until (scheduled) maintenance of the bearing, for example as part of regular maintenance. Of course, after removal of the damaged rolling element, it might be necessary to plan the exchange or repair of the roller bearing, but a loss of revenue is prevented or at least reduced during the necessary planning time. In other words, the method contributes to the prevention of an urgent, unplanned stop of the wind turbine operation due to a rotor bearing breakdown and unplanned maintenance can thus be avoided. Such unplanned maintenance, in particular an unplanned rotor bearing exchange, is typically more expensive than a scheduled rotor bearing exchange. Further, the method contributes to an increase of a rotor bearing lifetime, e.g. by a few months.

The term "remaining" refers to the rolling elements of the rolling bearing that are not recognized as damaged and are not removed. For example, this means the non-damaged rolling elements.

The detecting step is performed during operation of the wind turbine. The operation of the wind turbine includes all possible operating states in which the rotor rotates. It includes the production operation in which the wind turbine produces electrical power, either in partial load or in full load. Furthermore, it includes the idling operation in which the wind turbine does not produce any electrical power, but the rotor keeps rotating, for example to avoid the apparition of standstill marks on the rotor bearing. After removal of the damaged rolling element(s), the subsequent operation of the wind turbine may involve a limited power production (see below).

Although the inventive method is described with respect to one damaged rolling element, it is understood here and in the following analogously that the inventive method also includes the detection and the removal of several damaged rolling elements of the roller bearing prior to the continued operation of the wind turbine. In general, the method addresses the detection and removal of one or more damaged rolling elements and the wind turbine continues to operate with a number of rolling elements reduced by the number of removed rolling elements.

According to an embodiment, in the removing step, the damaged rolling element is first broken down into individual parts, which are subsequently removed. Thus, the rolling element can be easily removed out of the roller bearing, in particular out of the roller bearing cage.

According to an embodiment, the damaged rolling element is drilled and/or sawn into individual parts. This contributes to the above functions and advantages. Other measures such as laser cutting or waterjet cutting of the damage rolling element are also conceivable.

According to an embodiment, a condition monitoring system is used for the detecting step. A condition monitoring system is a system configured to monitor one or more states of the rotor bearing, for example by means of one or more sensors like vibration sensors, in order to detect damage to the rotor roller bearing. Typically, a rotor roller bearing comprises several clearly differentiated components, namely the bearing inner ring, the rolling elements (rollers, balls, cylinders, etc.), the cage and the bearing outer ring. A deterioration of each of these components generates one or more characteristic failing frequencies in the frequency spectra that will allow for a quick and easy identification by the condition monitoring system. Damage to a rolling element can thus be detected by the condition monitoring system. In this regard, reference is made to patent literature EP 3421786 B1, for example to paragraphs [0001] to [0005], for exemplary details and embodiments of a condition monitoring system.

According to an embodiment, the condition monitoring system comprises one or more vibration sensors, the vibration sensors being configured to collect vibration data related to the roller bearing, and the condition monitoring system being configured, based on the collected vibration data, to evaluate that damage of a rolling element has occurred. The vibration sensors are arranged, e.g. directly attached to, at one or several of the above mentioned components of the roller bearing.

According to an embodiment, the step of detecting comprises at least two sub-steps:
- determining in general that one of the rolling elements of the plurality of rolling elements is damaged, and subsequently
- identifying the specific damaged rolling element.

By this two-step detection process, the specific damaged rolling element(s) can be reliably identified. For example, with respect to detection of a damaged rolling element, in particular via the condition monitoring system, it is only possible to detect that one or more rolling elements are damaged, however, it is not known which specific rolling element(s) is/are damaged, e.g. cracked. Thus, a further inspection needs to be carried out after the general detection of damage.

According to an embodiment, the identifying step comprises a visual inspection of the plurality of rolling elements. For example, damage can be detected by means of an endoscope. Also, an optical inspection by a technician can be done with the naked eye. This contributes to the above-mentioned functions and advantages.

According to an embodiment, the operation of the wind turbine is stopped prior to the step of removing the damaged rolling element. Stopping the operation of the wind turbine means that no more electrical power is produced by the wind turbine and the rotation of the rotor is stopped (for safety purposes, the rotation of the rotor is prevented, for example via a rotor locking system). However, some devices of the wind turbine may still be (temporarily) operated in the stopped state, e.g. cooling system, fans, lights and the like. Thus, a safe and secure removal of the damaged rolling element is possible.

According to an embodiment, the operating step comprises operating the wind turbine in a derated power mode. In other words, the wind turbine is operated in a reduced mode or low power mode, in which loads on the rotor bearing are tendentially lower than in a normal mode. Compared to a normal mode, this ensures that the wind turbine can operate for as long as possible, with the at least one damaged rolling element removed, until maintenance of the roller bearing, e.g. the replacement, takes place.

Additionally or alternatively, the operating step comprises operating the wind turbine in a thrust limitation mode. In other words, the wind turbine is operated such that a thrust force acting on the rotor of the wind turbine is limited. The limitation of the thrust force can for example be achieved by controlling the pitch angle of the rotor blades, e.g. by defining a minimum pitch angle dependent on the wind speed, and/or by controlling the speed of rotation of the rotor. By limiting the thrust force acting on the rotor, it is ensured that the loads on the rotor bearing, in particular the axial load, remain below certain levels which could be reached without thrust limitation. This ensures that the wind turbine can operate for as long as possible, with the at least one damaged rolling element removed, until maintenance of the roller bearing, e.g. the replacement, takes place.

According to an embodiment, in the derated power mode a rated power level of the wind turbine is lower than a rated power level of the wind turbine in a normal power mode, i.e. in a non-derated power mode. For example, in the derated power mode, the wind turbine controller generates a derated power curve having a lower rated power level (i.e. a lower maximum available power level) than the rated power level of a normal (i.e. non-derated) power curve. Tendentially, the derated power curve in the part-load range also has a lower available power than the available power of the normal power curve for a given wind speed. A power curve shows the available power output level as a function of wind speed for a given turbine in accordance with its design rating.

Exemplarily, with regard to the derated power mode, it is referred to patent literature EP 3 161 310 B1 for details and exemplary embodiments of a derated power mode.

For example, in the derated power mode, the rotational speed profile of the wind turbine remains unchanged, i.e. is not reduced, after removal of a rolling element.

According to an embodiment the rated power level in the derated power mode depends on the time remaining until a scheduled maintenance of the roller bearing, i.e. repair or replacement of the roller bearing. Alternatively or additionally, the rated power level in the derated power mode depends on the number of damaged rolling elements. Alternatively or additionally, the rated power level in the derated power mode depends on the relative location of the damaged rolling elements. This contributes to the above-mentioned functions and advantages.

According to an embodiment, in the thrust limitation mode a maximum thrust level acting on the rotor of the wind turbine is set. In other words, the wind turbine is controlled in such a way that the thrust force acting on the rotor never exceeds a maximum thrust level. In particular, the maximum thrust level depends on the time remaining until a scheduled maintenance of the roller bearing, i.e. repair or replacement of the roller bearing. Alternatively or additionally, the maximum thrust level depends on the number of damaged rolling elements. Alternatively or additionally, the maximum thrust level depends on the relative location of the damaged rolling elements. This contributes to the above-mentioned functions and advantages.

According to an embodiment, the operating step is only executed if a predefined criterium is fulfilled, the predefined criterium depending on a number of damaged rolling elements and/or on the relative location of the damaged rolling elements. For example, the removing step and the operating step are not executed in case the number of damaged rolling elements exceeds a predefined threshold and/or in case the number of damaged rolling elements adjacent to one another exceeds a predefined threshold. This contributes to the above-mentioned functions and advantages. Optionally, the removing step is only executed if the predefined criterium is fulfilled. Given that in case the predefined criterium is fulfilled, the wind turbine will not be operated until maintenance of the roller bearing, e.g. the replacement, takes place, the removal step may also be skipped.

According to an embodiment, in the operating step, operation of the wind turbine is enabled for a predetermined maximum period. For example, a maximum period is 1 year, 9 months or 6 months. For example, the operating step is stopped after the maximum period, e.g. after 6 months, if the rotor bearing has not been repaired or replaced within the maximum period. This prevents the wind turbine, and particularly the roller bearing, from sustaining further or greater damage.

According to an embodiment, after detection of the damage, a signal is generated, the signal being configured to indicate a warning to an operator of the wind turbine. For example, the warning is an acoustic warning, a warning message or an optical warning. This enables the operator to be promptly informed about the damage detection.

Further advantages, features and further developments are set out by the following exemplary embodiments which are explained in conjunction with the figures. The same or similar elements or elements acting in the same way are provided with the same reference numerals in the figures, wherein:
Fig. 1 shows a schematic illustration of a wind turbine,
Fig. 2 shows a schematic cross-section of a roller bearing,
Fig. 3 shows a perspective view of the roller bearing, and
Fig. 4 shows a schematic flow diagram of a method for operating a wind turbine.

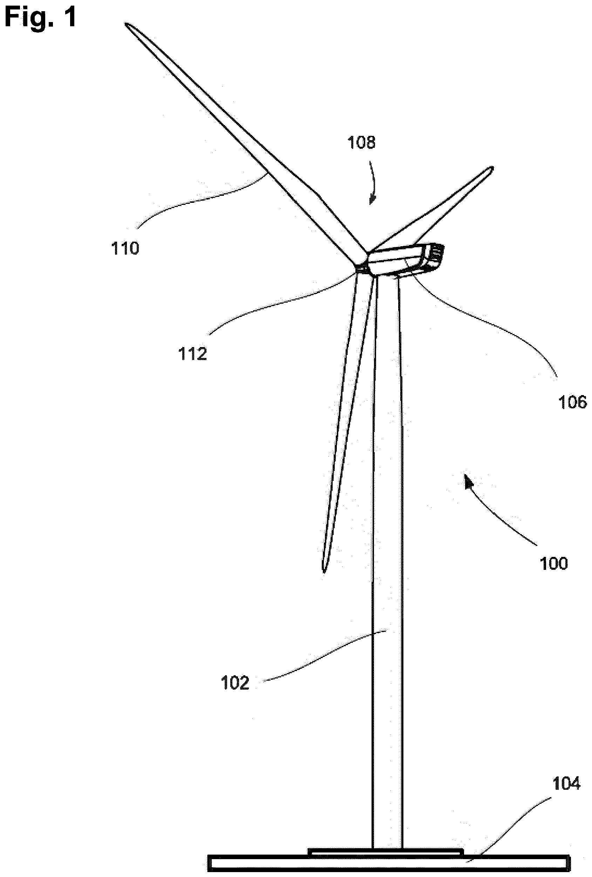

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

The wind turbine 110 includes a plurality of bearings to provide rotation of the various components thereof as already mentioned in the introductory part. In the following a method for operation of the wind turbine 110 according to an embodiment of the invention is described, thereby referring to the main roller bearing. At this point it is noted that the following description is also applicable to any other roller bearing of the wind turbine 110.

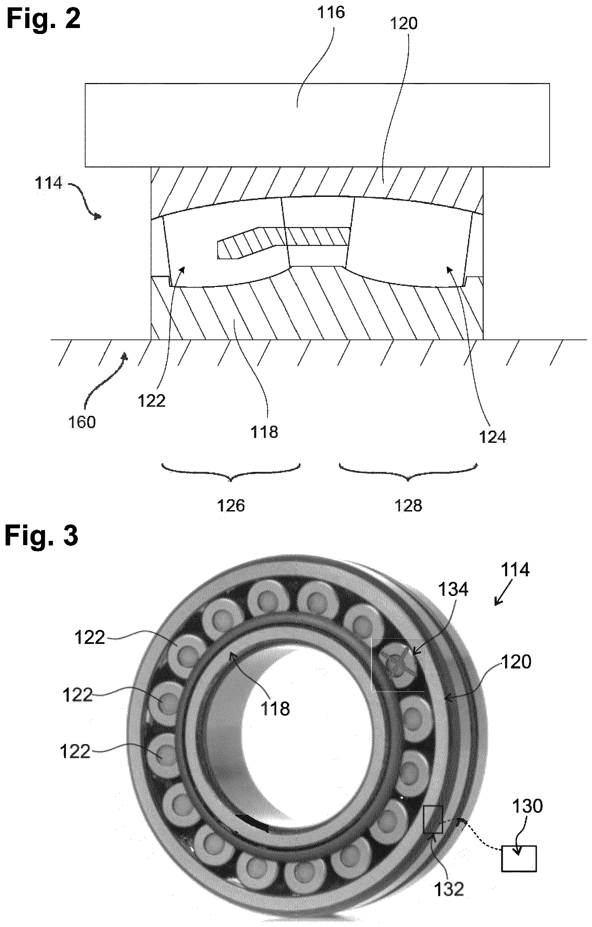

Figure 2 schematically shows a roller bearing 114 for the wind turbine 100 according to an embodiment of the invention in a half longitudinal center cross-section. The roller bearing 114 is a spherical roller bearing and is used, for example, to support the rotor shaft 160 of the wind turbine 100 in the nacelle 106.

The roller bearing 114 is mounted in a schematically illustrated bearing housing 116. The spherical roller bearing 114 has a bearing inner ring 118 and a bearing outer ring 120. The roller bearing 114 has first rolling elements 122 and second rolling elements 124 (hereinafter also referred to briefly as rolling elements 122, 124) in the form of barrel rollers, the rolling elements 122 forming a first roller row 126 and the rolling elements 124 forming a second roller row 128. The rolling elements 122 and 124 are equally distributed circumferentially and the two roller rows 126 and 128 are axially spaced apart.

Figure 3 shows the roller bearing 114 in a perspective view.

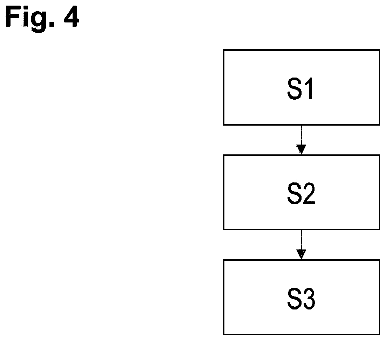

Figure 4 shows a flowchart of a method for operating the wind turbine 110 comprising the above-described roller bearing 114. The method enables the above-mentioned functions and advantages. It is noted that the method as described in the following is also applicable to any other kind of roller bearing of a wind turbine 110.

In a first step S1, during a normal operation of the wind turbine 110, a damaged rolling element 134 of the plurality of rolling elements 122, 124 is detected. The detection is done via a condition monitoring system 130 as described above. The condition monitoring system 130 comprises one or more vibration sensors 132, which are directly attached to the bearing housing 116, e.g. onto the outer surface of the bearing housing 116 or integrated within the bearing housing 116. The vibration sensors 132 are configured to collect vibration data related to the roller bearing arrangement including the roller bearing 114, and the condition monitoring system 130 then evaluates, based on the collected vibration data, whether damage of a rolling element 134 has occurred.

Optionally, the detection of damage can be accompanied by the generation of a signal, e.g. a visual or acoustic signal, to indicate a warning, e.g. to an operator of the wind turbine 110. Thus, immediate action can be taken, e.g. the steps below.

In particular, in a first sub-step the condition monitoring system 130 generally detects that at least one of the rolling elements 122, 124 is damaged, without knowing which specific rolling element 122, 124 is damaged. In a second sub-step, the specific damaged rolling element 134 is identified (see cross in figure 3). In the second sub-step, for example, an endoscope is used.

In a next step S2, the specific damaged rolling element 134 is removed from the rotor bearing 114. In this regard, the specific damaged rolling element 134 is broken down into individual parts by drilling and/or sawing. The individual parts are then removed out of the roller bearing 114, in particular out of the roller bearing cage (not illustrated).

We note that the operation of the wind turbine 110 is stopped prior to the removal according to step S2.

In a next step S3, the wind turbine 110 is set to operate again with the roller bearing 114 comprising the remaining rolling elements 122, 124, which have not been removed. Thus, in the present example, the roller bearing 114 is used with one rolling element 122, 124 less than the original number of rolling elements.

In step S3, the wind turbine 110 may be operated in a derated power mode, as described in the introductory part of this description. Additionally, the wind turbine 110 may be operated only for a predetermined maximum time period, e.g. 6 months.

### Reference signs

- 100: wind turbine
- 102: tower
- 104: foundation
- 106: nacelle
- 108: rotor
- 110: rotor blade
- 112: rotor hub
- 114: roller bearing
- 116: bearing housing
- 118: bearing inner ring
- 120: bearing outer ring
- 122: first rolling elements
- 124: second rolling elements
- 126: first row of rollers
- 128: second row of rollers
- 130: condition monitoring system
- 132: vibration sensor
- 134: specific damage rolling element
- 160: rotor shaft
- S1-3: step

## Claims

1. Method for operating a wind turbine (110), the wind turbine (110) comprising at least a roller bearing (114) for supporting the rotor shaft (160), wherein the roller bearing (114) comprises a bearing inner ring (118), a bearing outer ring (120) and a plurality of rolling elements (122, 124) being arranged between the bearing outer ring (120) and the bearing inner ring (118), the method comprising the following steps:
- detecting, during operation of the wind turbine (110), a damaged rolling element (134) of the plurality of rolling elements (122, 124),
- removing the damaged rolling element (134) from the rotor bearing (114),
- operating the wind turbine (110) with the roller bearing (114) comprising the remaining rolling elements (122, 124).

2. Method according to claim 1, wherein, in the removing step, the damaged rolling element (134) is first broken down into individual parts, which are subsequently removed.

3. Method according to claim 2, wherein the damaged rolling element (134) is drilled and/or sawn into individual parts.

4. Method according to any one of the preceding claims, wherein a condition monitoring system (130) is used for the detecting step.

5. Method according to claim 4, wherein the condition monitoring system (130) comprises one or more vibration sensors (132), the vibration sensors (132) being configured to collect vibration data related to the roller bearing (114), and the condition monitoring system (130) being configured, based on the collected vibration data, to evaluate that damage of a rolling element (134) has occurred.

6. Method according to any one of the preceding claims, wherein the detecting step comprises at least two sub-steps:
- determining in general that one of the rolling elements (122, 124) of the plurality of rolling elements (122, 124) is damaged, and subsequently
- identifying the specific damaged rolling element (134).

7. Method according to claim 6, wherein the identifying step comprises a visual inspection of the plurality of rolling elements (122, 124), e.g. by means of an endoscope.

8. Method according to any one of the preceding claims, wherein the operation of the wind turbine (110) is stopped prior to the step of removing the damaged rolling element.

9. Method according to any one of the preceding claims, wherein the operating step comprises operating the wind turbine (110) in a derated power mode and/or in a thrust limitation mode.

10. Method according to claim 9, wherein in the derated power mode a rated power level of the wind turbine (110) is lower than a rated power level of the wind turbine (110) in a normal power mode.

11. Method according to claim 10, wherein the rated power level in the derated power mode depends on the time remaining until a scheduled maintenance of the roller bearing (114), the number of damaged rolling elements (134) and/or the relative location of the damaged rolling elements (134).

12. Method according to any one of claims 9 to 11, wherein in the thrust limitation mode a maximum thrust level acting on a rotor of the wind turbine is set, wherein in particular the maximum thrust level depends on the time remaining until a scheduled maintenance of the roller bearing (114), the number of damaged rolling elements (134) and/or the relative location of the damaged rolling elements (134).

13. Method according to any one of the preceding claims, wherein the operating step is only executed if a predefined criterium is fulfilled, the predefined criterium depending on a number of damaged rolling elements (134) and/or on the relative location of the damaged rolling elements (134).

14. Method according to any one of the preceding claims, wherein, in the operating step, operation of the wind turbine is enabled for a predetermined maximum period.

15. Method according to any one of the preceding claims, wherein after detection of the damage, a signal is generated, the signal being configured to indicate a warning to an operator of the wind turbine (110), wherein in particular the warning comprises an acoustic warning, a warning message or an optical warning.
